# EUROPEAN PATENT APPLICATION

(11) **EP 4 429 292 A1**
(43) Date of publication of application: **11.09.2024**
(21) Application number: 23020108.9
(22) Date of filing: 07.03.2023
(51) Int. Cl.: H04W 8/20, H04W 4/50, H04W 12/42

(54) **PROFILE GENERATION FOR PROVISIONING THE PROFILE TO AN EUICC**

(71) Applicant: Giesecke+Devrient Mobile Security Germany GmbH, 81677 München (DE)
(72) Inventor: Schnellinger, Michael, 84032 Landshut (DE)
(74) Representative: Giesecke+Devrient IP

(57) **Abstract**

A method for generating at least one profile, for provisioning the profile to an eUICC designed to be hosted in a device, including the steps: S1) Provide profile generation data, including static profile data for generating a profile container (T_ISD-P[]) and dynamic; S2) generate a profile (P1), and a dynamic-data description file (D-XML) indicating content and storage location of at least the dynamic profile data in the profile; S3-1) Create, in the eUICC at least one profile container (T_ISD-P[]); S3-2) Provide the profile (P1) and the dynamic-data description file (D-XML) to a Dynamic Converter, and at the Dynamic Converter, with support of the dynamic-data description file (D-XML), extract the dynamic profile data from the profile (P1), for later transferring the extracted dynamic profile data (EDP-P1) to the eUICC, and installing the transferred extracted dynamic profile data (EDP-P1) into the profile container (T_ISD-P[]) created in step S3-1).

## Description

### Field of the invention

The present invention relates to generation of a profile intended to be provisioned to an eUICC designed to be hosted in a wireless network communication device, or briefly device.

### Background of the invention and prior art

The world is connected via wireless communication networks, also referred to as mobile communication networks, wherein devices hosting eUICCs communicate with each other and with wireless network background servers in a secured way. The eUICCs hosted in the devices comprise at least one or several subscription profiles, or briefly profiles, including profile data like an international mobile subscriber identity IMSI and an authentication key Ki, and a profile number ICCID, OTA keys, and further profile data, enabling communication in the wireless communication network.

For eUICCs, several form factors are known, including plug-in SIM-card, embedded and soldered-in eUICC in a strict sense, and integrated iUICC integrated into a chip of a chipset of the device hosting the eUICC.

Devices are for example known as consumer wireless network communication devices like smartphones and network-able tablet PCs, and as M2M wireless network communication devices including automotive wireless network communication devices and industrial wireless network communication devices. In the following, a device is meant to be a wireless network communication device, hosting an eUICC including one or several profiles, and constructed to communicate with other devices or network servers over a mobile communication network, herein including the eUICC for security relevant tasks like authentication.

The documents [1] [SGP.22] GSMA SGP.22 RSP Technical Specification Version 2.2.2, 05 June 2020, and [2] [SGP.02] SGP.02 - Remote Provisioning Architecture for Embedded UICC Technical Specification, Version 4.2, 07 July 2020, describe procedures and architectures for provisioning profiles to eUlCCs hosted in devices. Document [3] [SGP.31] GSMA SGP.31 eSIM loT Architecture and Requirements Version 1.0, 19 April 2022, describes procedures and architectures for provisioning profiles to eUlCCs hosted in devices in an loT environment.

The provisioning of a profile to an eUICC includes authentication between the profile server and the eUICC, profile download and profile installation. Document [1] [SGP.22], chapter 3.1.2 describes the Common Mutual Authentication, and chapter 3.1.3 describes profile download and installation to an eUICC of a consumer device. Documents [2], [3] describe similar procedures for M2M and loT environments. The profile download architecture includes a profile provisioning server, SM-DP+ in the case of [1] [SGP.22] or [3], or SM-DP in the case of [2] [SGP.02], a Profile Assistant in the device or in the eUICC or both, and which can be a Local Profile Assistant LPA as in [1], [2], or an loT Profile Assistant IPA as in [3], and the eUICC. Profiles are downloaded from the profile provisioning server over the Profile Assistant (LPA or IPA) to the eUICC.

According to [1] [SGP.22] and [2] [SGP.02], profiles are downloaded from a profile provisioning server usually in a Bound Profile Package BPP including a considerable amount of data.

The profile installation sub-procedure includes several sub-steps. According to [1] [SGP.22], chapter 3.1.3.3 Sub-procedure Profile Installation, step [3] (Fig. 14 and subsequent description), first a profile container ISD-P is established and configured, and subsequently, steps [4], [5] and [6] (also Fig. 14 and subsequent description), metadata, replaced session keys and profile data elements are installed in the profile container ISD-P. The profile container ISD-P is created from static profile data. The profile data elements installed in the profile container ISD-P are, are part of or comprise dynamic profile data.

Common Mutual Authentication, profile download from a profile provisioning server to an eUICC and profile installation in the eUICC take a considerable amount of time, usually more than ten seconds.

The generation of a profile is out of the scope of the documents [1] [SGP.22] and [2] [SGP.02]. For generation of a profile, profile data including static profile data and dynamic data are provided on a data generation platform of a profile provider as a proprietary profile, which is an arrangement of the profile data in a proprietary data format of the profile provider. For profile download from a profile provisioning server to an eUICC, the profile is required to be provided in a non-proprietary, standardized interoperable format as described in the document [5] [PP IF] SIM Alliance eUICC Profile Package: Interoperable Format Technical Specification, Version 2.3, October 2019, which is also referred to as TCA compliant format, Trusted Connectivity Alliance compliant format, according to the renaming of SIM Alliance to Trusted Connectivity Alliance. Therefore, at the data generation platform, the proprietary profile is transformed into a TCA compliant profile, and the TCA compliant profile is provided from the data generation platform to a profile provisioning platform, for example an SM-DP+ or SM-DP, for download to an eUICC.

In-factory personalization or provisioning is a setup in which profiles are provisioned to an eUICC locally in a factory environment, contrary to the standard remote provisioning procedures envisaged in [1] [SGP.22], [2] [SGP.02] and [3] [SGP.31], where a profile is downloaded to an eUICC from a remote profile provisioning server.

In In-Factory Provisioning, a profile is downloaded to an eUICC, not from a remote profile provisioning server like SM-DP+, however instead from a local Personalization Equipment residing in a secure production environment. The secure production environment can be a secure production environment of an eUICC manufacturer who manufactures the eUICC, or of a semiconductor chip manufacturer who manufactured a semiconductor chip hosted in the eUICC, or of a device manufacturer who manufactured the device. Further, in In-Factory Provisioning the eUICC is not necessarily mounted to a device yet, however can be mounted to an eUICC reader coupled to or integrated to the Personalization Equipment. In this case, the eUICC is provisioned from the Personalization Equipment via the eUICC reader. The Personalization Equipment in turn can for example be part of a production machine for manufacturing eUICCs.

Profile generation in an In-Factory Provisioning setup can be performed at the eUICC manufacturer instead of at the profile provider, or alternatively at the profile provider as in the standard provisioning setup.

The document [4] DE102019001840B3 from the prior art discloses a method for profile provisioning to an eUICC, wherein a profile downloaded to an eUICC comprises empty places into which, after download, and upon profile installation to the eUICC, profile data from another profile which is already present in the eUICC are inserted.

The document [5] EP2802162A1 from the prior art discloses a method for provisioning a profile to an eUICC, wherein an empty profile template is created by execution of an executable file, and profile data are loaded into the profile template.

The device manufacturers, including M2M device manufacturers and smartphone manufacturers, provisioning or having provisioned their devices, especially when provisioning in In-Factory Provisioning, request lower processing times for profile provisioning to eUICCs, below 10 seconds per provisioning of one profile.

With the full cycle of authentication, profile download and profile installation according to [1] [SGP.22] such low processing times for profile provisioning cannot be achieved.

Sometimes, profiles provided outside an eUICC, on a platform or server, are referred to as virtual profiles, whereas a profile installed in an eUICC is referred to simply as a profile.

### Objective of the invention

It is an object of the present invention to provide a method for provisioning a profile to an eUICC having a decreased processing time for the profile provisioning.

Particularly, a provisioning solution shall be provided suitable to make In-Factory Provisioning more efficient and less prone to errors.

### Summary of the invention

The object of the invention is achieved by a method with the following features, according to claim 1. Embodiments of the invention are presented in dependent claims.

The basic idea underlying the present invention is to split off preparative steps of profile provisioning and execute the split-off steps separately, so as to reduce the required processing time during actual profile provisioning.

Especially, the creation of a profile container, e.g. an ISD-P, in the eUICC is split off, and can be performed when time is available.

Later, during profile provisioning, only the profile data need to be provisioned into the already present profile container.

Correspondingly, the processing time for profile provisioning is reduced.

The method is particularly useful and applicable for In-Factory Personalization.

In greater detail, the present invention provides for a method for generating at least one profile, for provisioning the profile to an eUICC designed to be hosted in a device.

The method includes the steps:
S1) Provide profile generation data, including static profile data for generating a profile container and dynamic profile data, from a wireless network operator, MNO, or virtual wireless network operator, MVNO, to a data generation platform;
S2) Generate, from the profile generation data, including the static profile data for generating a profile container and the dynamic profile data, a profile and a dynamic-data description file indicating content and storage location of at least the dynamic profile data in the profile;
S3-1) Create, in the eUICC at least one profile container;
S3-2) Provide the profile and the dynamic-data description file to a IFPP Dynamic Converter, and at the IFPP Dynamic Converter, with support of the dynamic-data description file, extract the dynamic profile data from the profile, for later transferring the extracted dynamic profile data to the eUICC, and installing the transferred extracted dynamic profile data into the profile container created in step S3-1).

The dynamic profile data, for later storing into a prepared profile container, are retrieved from an already generated profile, hereby making use of the dynamic-data description file, and not from a data storage storing dynamic profile data of multiple profiles. This facilitates retrieving the dynamic profile data of only one profile and keeping the dynamic profile data of a profile aligned with the profile container generated from the static profile data of the same profile.

In greater detail, profile data provided for profile generation on a data generation platform, hosted by a hosting party which can be e.g. an eUICC manufacturer or a profile manufacturer, are usually provided on said data generation platform in a proprietary format established by the hosting party. The proprietary format established by the hosting party on its data generation platform can imply individual format features of the hosting party itself and/or of other parties, for example of an MNO or MVNO being the owner of a profile to be generated. Therefore, dynamic profile data may be arranged very differently on different data generation platforms. Therefore, retrieving dynamic profile data from a data generation platform requires detailed knowledge about the format and way of arrangement, for example storage location, of the dynamic profile data in the data generation platform.

On the contrary, retrieving dynamic profile data from a ready generated profile reduces the effort of retrieving the dynamic profile data to searching one single profile, irrespective of if the dynamic profile data are retrieved from a ready generated profile in a proprietary format or in a TCA compliant format.

In addition, when the dynamic profile data are retrieved from a profile in a TCA compliant format, the dynamic profile data are provided in the ready generated profile at well-defined standardized locations in the profile. Therefore, retrieving the dynamic profile data from a ready generated profile which is in a TCA compliant format has the additional advantage of additionally reduced complexity of the process of searching for and retrieving the stand-alone dynamic profile data.

The step S3-1) of creating the profile container and the step S3-2) of providing the profile and the dynamic-data description file to a IFPP Dynamic Converter can performed be either timely separated or at a similar time, and in any order of the two steps with respect to each other, i.e. either first step S3-1) or first step S3-2), depending on requirements of the particular use case.

According to some embodiments, two or more profiles, corresponding dynamic-data description files and corresponding extracted dynamic profile data are created.

According to the here-described embodiments, batches of dynamic profile data of several profiles can be provided in an ordered manner.

According to some embodiments, the method further comprises provisioning the generated profile to an eUICC, by performing the steps:
S4) transfer the extracted dynamic profile data, extracted in step S3-2), to the eUICC, and install the transferred extracted dynamic profile data into the profile container created in step S3-1).

The here-described steps complete the profile provisioning which was enabled by the above described method for generating a profile, with the purpose to later provision the profile to an eUICC.

According to some embodiments, step S4) is performed as a sequence of sub-steps:
S4-1) Provide the extracted dynamic profile data extracted in step S3-2) to an IFPP Controller installed in an eUICC production environment;
S4-2) Provide the eUICC with the created profile container at an eUICC read/write facility connected to or integrated into an eUICC production machine installed in said eUICC production environment;
S4-3) By the IFPP Controller, provide the extracted dynamic profile data to the eUICC production machine;
S4-4) By the eUICC production machine, download the extracted dynamic profile data to the eUICC, and install the transferred extracted dynamic profile data into the profile container created in step S3-1), so as to create and thereby provision the profile to the eUICC.

In the here-described embodiments, while the eUICC occupies the eUICC production machine, only the extracted dynamic profile data are required to be provisioned into the already present profile container. Thereby, the time span during which the eUICC occupies the eUICC production machine for profile provisioning is considerably reduced as compared to the traditional provisioning of an entire profile in one single step. Particularly in an IFPP eUICC production environment where machine occupancy time is valuable, the present solution is thus favorable. In addition, the lower amount of data to be transferred from the eUICC production machine to the eUICC can help to reduce risks of data transfer errors. Accordingly, the present provisioning solution is suitable to make In-Factory Provisioning more efficient and less prone to errors.

According to some embodiments, in step S3-1), two or more profile containers are created from static profile data of different profiles, wherein step S4-3) further comprises: select the correct profile container corresponding to the dynamic profile data provided in step S4-1).

According to the here-described embodiments, batches of dynamic profile data of several profiles can be provided in an ordered manner.

According to some embodiments, in steps S4-1 and S4-3), a profile identifier is provided along with the provided dynamic profile data, and the profile identifier is also provided along with the correct already present created profile container, wherein the correct profile container is selected based on the provided profile identifier.

According to some embodiments, the profile identifier is or comprises:
- a profile container identifier, ISD-P AID;
- a profile number, ICCID; or
- a profile name; or
- a combination of one or several or all of a profile container identifier, ISD-P AID a profile number, ICCID, and a profile name.

According to some embodiments, the dynamic profile data comprise one or several or all of the following:
- International Mobile Subscriber Identity IMSI;
- Authentication Key Ki;
- Further Authentication parameters;
- Profile number ICCID;
- Access Control Conditions ACC;
- one or several Personal Identification Numbers, PINs;
- one or several Personal Unblocking Keys, PUKs;
- Default-Issuer-Security-Domain-Profile, Default-ISD-P;
- other dynamic parameters for the MNO or MVNO, including Roaming Partners.

According to some embodiments, the generating according to step S2) comprises, on the data generation platform, which can hosted by an eUlCC manufacturer or by a profile provider:
S2-1) Generate, from the profile generation data, including the static profile data for generating a profile container and the dynamic profile data:
   - a proprietary profile in a data format proprietary to the profile provider; and
   - the dynamic-data description file;
S2-2) Transform the proprietary profile into a TCA compliant profile.

For provisioning to an eUICC, a profile is preferably provided in an interoperable TCA, Trusted Connectivity Alliance, compliant format. However, profile providers on their data generation platforms often make use of a proprietary profile format, such that transformation into a TCA compliant format is favorable or required. According to some embodiments, extracting the dynamic data according to step S3-2) is performed from the proprietary profile.

According to some embodiments, extracting the dynamic data according to step S3-2) is performed from the TCA compliant profile, with the above described additional advantages.

According to some embodiments, the IFPP Dynamic Converter extracting the dynamic data is provided at the data generation platform.

According to some embodiments, the IFPP Dynamic Converter extracting the dynamic data is provided at a profile provisioning platform, for example an SM-DP+ or SM-DP, to which the TCA compliant profile and the dynamic-data description file are provided after generation.

According to some embodiments, the IFPP Dynamic Converter extracts the dynamic data from the profile, with support of the dynamic-data description file, in reaction to the profile provisioning platform (for example an SM-DP+ or SM-DP) receiving a request to download the profile to said eUICC in which the profile container corresponding to the profile is already installed. In this case, first the profile container may be installed in the eUICC, and later, possibly much later, the dynamic profile data are extracted from the profile.

According to some embodiments, the request to download the profile is received from an eUICC production machine, particularly an eUICC production machine in an In-Factory-Provisioning environment.

### Brief description of the drawings

Embodiments of the invention will now be described with reference to the accompanying drawings, throughout which like parts are referred to by like references, and in which represents:
- Fig. 1: A profile provisioning setup comprising an IFPP Dynamic Converter, according to embodiments of the invention;
- Fig. 2: A profile provisioning setup comprising an IFPP Controller, suited to be combined with the embodiments of Fig. 1;
- Fig. 3: details of two options for providing an IFPP Converter in combination with TCA compliant profiles, according to embodiments of the invention.

### Detailed description of the invention

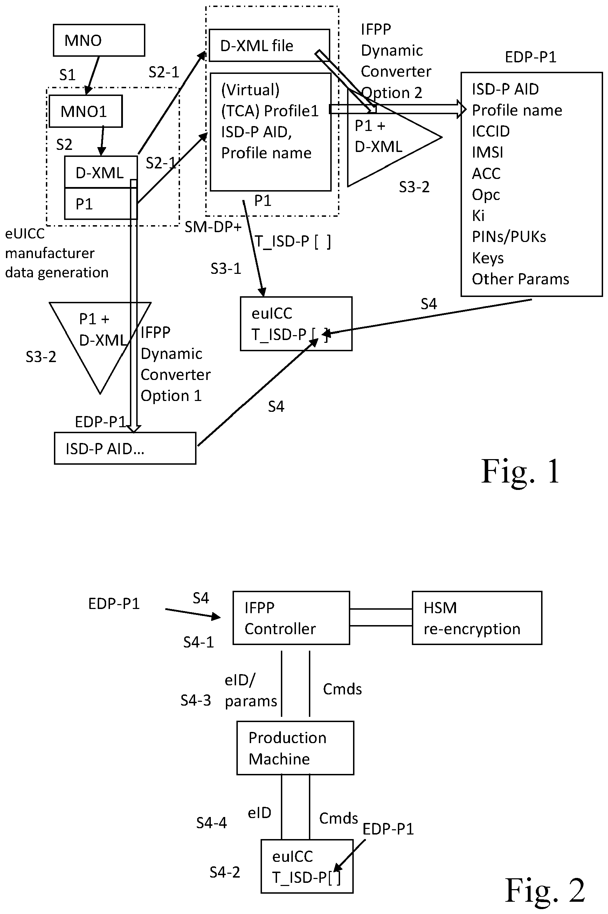

Fig. 1 shows a profile provisioning setup comprising an IFPP Dynamic Converter, according to embodiments of the invention. A wireless network operator, often also referred to as Mobile Network Operator, MNO, provides, in a first step S1), profile generation data MNO1, including static profile data for generating a profile container T_ISD-P[] and dynamic profile data EDP-P1 to a data generation platform. The data generation platform is a server or computer able to process the profile data so as to generate a profile. The data generation platform is provided at an eUICC manufacturer, can however alternatively be provided at a profile provider. In a step S2), from the first profile generation data MNO1, including the static profile data for generating a profile container, ISD-P, and the dynamic profile data, a first profile P1 is generated. The first profile P1 can in its current state also be named a virtual profile P1, since currently it is provided on a server, the data generation platform, and not yet installed to an eUICC. Further, there is generated a dynamic-data description file D-XML indicating content and storage location of at least the dynamic profile data in the first profile P1. The wireless network operator MNO also provides of further sets of profile data similar to the first profile data MNO1, for example of second profile data MNO2, from which a second profile P2 can be generated (not further described here).

In embodiments with an IFPP Converter provided at a profile provisioning server SM-DP+, a step S2-1) is executed, wherein the generated profile P1 and the generated dynamic-data description file D-XML are provided to the profile provisioning server SM-DP+. Also on the SM-DP+, the profile P1 can also be named a virtual profile P1, not yet being installed to an eUICC.

In a further step S3-1) in the eUICC, at least one profile container T_ISD-P[] is created from the static profile data of the first profile data MNO1.

In a further step S3-2), the generated first profile P1 and the dynamic-data description file D-XML of the first profile P1 is provided to an IFPP Dynamic Converter. At the IFPP Dynamic Converter, with support of the dynamic-data description file D-XML, the dynamic profile data EDP-P1 are extracted from the first profile P1. Profile data MNOi for further profiles Pi may be present (not shown).

According to a first option 1, the IFPP Dynamic Converter is provided in or connected to the data generation platform, particularly at the eUICC manufacturer.

According to a second option 2, the IFPP Dynamic Converter is provided in or connected to the profile provisioning server SM-DP+, to which, in step S2-1) the generated profile P1 and the generated dynamic-data description file D-XML are provided.

In a later step S4, the extracted dynamic profile data EDP-P1 can be transferred to the eUICC, and installed into the profile container T_ISD-P[] created in step S3-1.

In the embodiment of Fig. 1, the dynamic profile EDP-P1 data of the first profile P1 comprise the following: a profile container identifier ISD-P AID of the profile container T_ISD-P[] that is created in step S3-1, a profile name, an ICCID (profile number), an IMSI (subscriber identity), ACC, Opc, Authentication key Ki, PINs and PUKs, Keys, and possibly further parameters.

Fig. 2 shows a profile provisioning setup comprising an IFPP Controller in a production environment, suited to be combined with the embodiment of Fig. 1.

According to the embodiment of Fig. 2, in a later step S4, the extracted dynamic profile data EDP-P1 are transferred from an IFPP Controller to the eUICC, and installed into the profile container T_ISD-P[] created in step S3-1.

In detail, step S4 comprises to:
S4-1) Provide the extracted dynamic profile data EDP-P1 extracted in step S3-2) to an IFPP Controller installed in an eUICC production environment;
herein, the dynamic profile data EDP-P1 can be encrypted with a transport key, and be sent to an HSM, be re-encrypted in the HSM with an eUICC specific key, and be sent back to the IFPP Controller;
S4-2) Provide the eUICC with the created profile container T_lSD-P[] at an eUICC read/write facility connected to or integrated into an eUICC production machine installed in said eUICC production environment;
S4-3) By the IFPP Controller, provide the extracted dynamic profile data EDP-P1 to the eUICC production machine;
S4-4) By the eUICC production machine, download the extracted dynamic profile data EDP-P1 to the eUICC, and write the transferred extracted dynamic profile data EDP-P1 into the profile container T_ISD-P[] created in step S3-1), so as to create and thereby provision the profile to the eUICC.

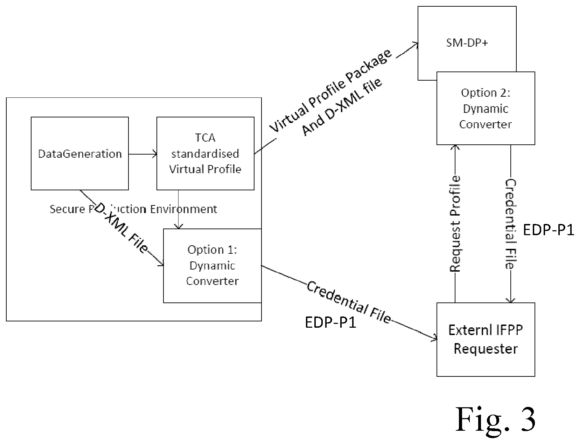

Fig. 3 shows in detail two options for providing an IFPP Converter in combination with TCA compliant profiles, according to embodiments of the invention. The profile data are provided on a data generation platform. The data generation platform is provided in a secure production environment. On the data generation platform, a proprietary profile in a proprietary data format of an owner or host of the data generation platform (e.g. an eUICC manufacturer or a profile provider) is generated from the profile data. The proprietary profile is transformed into a TCA compliant profile, to be provided to a profile provisioning platform, which can be provided either at an IFPP production machine or at an SM-DP+. In addition, a dynamic-data description file D-XML is generated.

According to the embodiment of Fig. 3, an external IFPP Requester requests to provision the profile P1 to an eUICC in which already a profile container T_ISD-P[] has been created with the static profile data of the profile P1, as an empty profile mask T_ISD-P[] for later receiving the dynamic profile data EDP-P1 of the same profile P1. With the dynamic-data description file D-XML, the dynamic profile data EDP-P1 are extracted from the TCA compliant profile, packed into a credential file, and sent to an IFPP Controller.

According to a first option, Option 1, the dynamic profile data EDP-P1 are extracted from the TCA compliant profile already on the data generation platform. Correspondingly, the IFPP Dynamic Converter is provided on the data generation platform.

According to a second option, Option 2, the dynamic profile data EDP-P1 are extracted from the TCA compliant profile on the data provisioning platform SM-DP+. Correspondingly, the IFPP Dynamic Converter is provided on the data provisioning platform SM-DP+. In this case, both the TCA compliant profile and the dynamic-data description file D-XML are transmitted from the data generation platform to the data provisioning platform SM-DP+.

### Cited documents

[1] [SGP.22] GSMA SGP.22 RSP Technical Specification Version 2.2.2, 05 June 2020
[2] [SGP.02] SGP.02 - Remote Provisioning Architecture for Embedded UICC Technical Specification, Version 4.2, 07 July 2020
[3] [SGP.31] GSMA SGP.31 eSIM loT Architecture and Requirements Version 1.0, 19 April 2022
[4] DE102019001840B3
[5] [PP IF] SIM Alliance eUICC Profile Package: Interoperable Format Technical Specification, Version 2.3, October 2019

## Claims

1. A method for generating at least one profile, for provisioning the profile to an eUICC designed to be hosted in a device, including the steps:
S1) Provide profile generation data, including static profile data for generating a profile container (T_ISD-P[]) and dynamic profile data, from a wireless network operator, MNO, or virtual wireless network operator, MVNO, to a data generation platform;
S2) Generate, from the profile generation data, including the static profile data for generating a profile container (T_ISD-P[]) and the dynamic profile data, a profile (P1), and a dynamic-data description file (D-XML) indicating content and storage location of at least the dynamic profile data in the profile (P1);
S3-1) Create, in the eUICC at least one profile container (T_ISD-P[]);
S3-2) Provide the profile (P1) and the dynamic-data description file (D-XML) to a IFPP Dynamic Converter, and at the IFPP Dynamic Converter, with support of the dynamic-data description file (D-XML), extract the dynamic profile data (EDP-P1) from the profile (P1), for later transferring the extracted dynamic profile data (EDP-P1) to the eUICC, and installing the transferred extracted dynamic profile data (EDP-P1) into the profile container (T_ISD-P[]) created in step S3-1).

2. The method according to claim 1, wherein two or more profiles, corresponding dynamic-data description files (D-XML) and corresponding extracted dynamic profile data are created.

3. The method according to claim 1 or 2, further comprising provisioning the generated profile to an eUICC, by performing the steps:
S4) transfer the extracted dynamic profile data (EDP-P1) extracted in step S3-2) to the eUICC, and install the transferred extracted dynamic profile data (EDP-P1) into the profile container (T_ISD-P[]) created in step S3-1).

4. The method according to claim 3, wherein step S4) is performed as a sequence of sub-steps:
S4-1) Provide the extracted dynamic profile data (EDP-P1) extracted in step S3-2) to an IFPP Controller installed in an eUICC production environment;
S4-2) Provide the eUICC with the created profile container (ISD-P) at an eUICC read/write facility connected to or integrated into an eUICC production machine installed in said eUICC production environment;
S4-3) By the IFPP Controller, provide the extracted dynamic profile data (EDP-P1) to the eUICC production machine;
S4-4) By the eUICC production machine, download the extracted dynamic profile data (EDP-P1) to the eUICC, and install the transferred extracted dynamic profile data (EDP-P1) into the profile container (T_ISD-P[]) created in step S3-1), so as to create and thereby provision the profile to the eUICC.

5. The method according to claim 4, wherein, in step S3-1), two or more profile containers (T_ISD-P[]) are created from static profile data of different profiles, and wherein step S4-3) further comprises: select the correct profile container (T_ISD-P[]) corresponding to the dynamic profile data (EDP-P1) provided in step S4-1).

6. The method according to claim 5, wherein in steps S4-1 and S4-3), a profile identifier is provided along with the provided dynamic profile data (EDP-P1), and the profile identifier is also provided along with the correct already present created profile container (T_ISD-P[]), and wherein the correct profile container (T_ISD-P[]) is selected based on the provided profile identifier.

7. The method according to claim 6, wherein the a profile identifier is or comprises:
- a profile container identifier, ISD-P AID;
- a profile number, ICCID; or
- a profile name; or
- a combination of one or several or all of a profile container identifier, ISD-P AID a profile number, ICCID, and a profile name.

8. The method according to any of claims 1 to 7, wherein the dynamic profile data (EDP-P1) comprise one or several or all of the following:
- International Mobile Subscriber Identity IMSI;
- Authentication Key Ki;
- Further Authentication parameters (OP(c))
- Profile number ICCID;
- Access Control Conditions ACC;
- one or several Personal Identification Numbers, PINs;
- one or several Personal Unblocking Keys, PUKs;
- Default-Issuer-Security-Domain-Profile, Default-ISD-P;
- other dynamic parameters for the MNO or MVNO, including Roaming Partners.

9. The method according to any of claims 1 to 8, wherein the generating according to step S2) comprises, on the data generation platform:
S2-1) Generate, from the profile generation data, including the static profile data for generating a profile container, ISD-P, and the dynamic profile data:
- a proprietary profile in a data format proprietary to the profile provider; and
- the dynamic-data description file (D-XML);
S2-2) Transform the proprietary profile into a TCA compliant profile.

10. The method according to claim 9, wherein extracting the dynamic data (EDP-P1) according to step S3-2) is performed from the proprietary profile.

11. The method according to claim 9, wherein extracting the dynamic data (EDP-P1) according to step S3-2) is performed from the TCA compliant profile.

12. The method according to any of claims 1 to 11, wherein the IFPP Dynamic Converter extracting the dynamic data (EDP-P1) is provided at the data generation platform.

13. The method according to any of claims 1 to 11, wherein the IFPP Dynamic Converter extracting the dynamic data (EDP-P1) is provided at a profile provisioning platform (SM-DP+; SM-DP) to which the profile, particularly TCA compliant profile, and the dynamic-data description file (D-XML) are provided (S2-1) after generation.

14. The method according to claim 13, wherein the IFPP Dynamic Converter extracts the dynamic data (EDP-P1) from the profile (P1), with support of the dynamic-data description file (D-XML), in reaction to the profile provisioning platform (SM-DP+; SM-DP) receiving a request to download the profile (P1) to said eUICC in which the profile container (T_ISD-P[]) corresponding to the profile (P1) is already installed.

15. The method according to claim 14, wherein the request to download the profile is received from an eUICC production machine, particularly an eUICC production machine in an In-Factory-Provisioning environment.
